# EUROPÄISCHE PATENTSCHRIFT

(11) **EP 0 689 635 B1**
(45) Veröffentlichungstag und Bekanntmachung des Hinweises auf die Patenterteilung: **13.05.1998**
(21) Anmeldenummer: 95905537.7
(22) Anmeldetag: 13.01.1995
(51) Int. Cl.: E21B 17/046, F16L 21/08, F16L 25/08

(54) **BOHRROHR MIT EIN- ODER BEIDENDIG ANGEBRACHTEN VERBINDUNGSMUFFEN**
CASING PIPE WITH COUPLING SLEEVES AT ONE OR BOTH ENDS
TUBE DE FORAGE POURVU DE MANCHONS DE RACCORDEMENT A UNE OU AUX DEUX EXTREMITES

(30) Priorität: 26.01.1994 DE 4402202
(43) Veröffentlichungstag der Anmeldung: 03.01.1996
(73) Patentinhaber: Bauer Spezialtiefbau GmbH, 86529 Schrobenhausen (DE)
(72) Erfinder: FROMME, Theo, D-56154 Boppard (DE)
(74) Vertreter: Allgeier, Kurt
(86) Internationale Anmeldenummer: DE9500033
(87) Internationale Veröffentlichungsnummer: WO9520716

(56) Entgegenhaltungen:
- DE-A- 4 032 928

## Beschreibung

Die Erfindung betrifft ein Bohrrohr mit ein- oder beidendig, angebrachten Verbindungsmuffen zum Ankuppeln weiterer Bohrrohre zu einem Bohrrohrstrang, bei dem sich überlappend ineinandergreifenden Muffen- und Zapfen-Kuppelteile umfangs verteilt angeordnete radiale Bohrungen aufweisen, in welche in diesen gelagerte Kupplungsglieder lösbar eingesetzt sind.

Derartige mit Muffen- und Zapfen-Kuppelteilen an den Bohrrohrenden versehene Verbindungen von Bohrrohrschüssen sind bekannt, die als sogenannter Muffenstoss ineinander geschoben werden. Als Blockierelement und gleichzeitig als Sicherung gegen Herausziehen sind unterschiedliche formschlüssig wirkende Elemente im Gebrauch.

Durch die G 90 14 396.5 und die DE 40 32 928 A1 ist es bekannt, mit einer konischen Hülse, die mittels eines Gewindebolzens mit Bund in den Konussitze eingezogen wird, die formschlüssige Verbindung des Rohrmuffenstosses herzustellen. Auch mit der DE 39 42 030 A1 wird ein konischer Gewindeschraubbolzen vorgeschlagen, der im Konusteil einen festen Sitz hat, wobei der Gewindeteil minimal horizontal verschiebbar gelagert ist. Auch sind solche Bolzenverbindungen mit starrem Gewindesitz bekannt. Bei den Rohrstrang beanspruchenden Biegemomenten können Zwängungen mit der Folge von Verformungen, vor allem im Gewindebereich auftreten, wodurch das Lösen der Kupplungen erschwert oder unmöglich wird.

Ferner ist durch die DE 35 19 773 A1 eine Steckverbindung bekanntgeworden, bei der zur Verriegelung eine Art Kette in den Ringraum der beiden gegenüberliegenden Ringnuten von Zapfen- und Muffenteil geschoben wird. Auch werden Verriegelungen benutzt, bei denen an Stelle der Ketten, Flachkeile oder Flachriegel eingesetzt werden.

Ausserdem wird in der DE 22 11 041 C1 eine Bohrrohr-Verbindung vorgeschlagen, bei der die radial gerichteten Verbindungselemente als Klemmhülse mit in diese eintreibbarem Spannelement zum Aufweiten der Klemmhülse ausgebildet sind. Die Klemmhülse ist sowohl nach der Rohrinnen- als auch nach der Rohraussenseite konisch zu erweitern und verhakt sich somit in den beiden Gegenkonen-Sitzen.

Derartige Verbindungsvorrichtungen weisen teilweise den Nachteil auf, dass die Spreizhülsen häufig den grossen Belastungen nicht standhalten; sie lockern sich auch. Von den Verrohrungsmaschinen werden sehr grosse Drehmomente und Zugkräfte auf die Bohrrohre übertragen. Die Drehbewegung der Rohre kann bekanntlich überwiegend oszillierend aber auch rotierend sein, d. h., dass mit extremen Wechselbelastungen zu rechnen ist.

Inwieweit die Kräfte bei derartigen Kupplungen auf die unterschiedlichen Elemente gleichmässig verteilt sind und die Lastübertragung annähernd homogen erfolgt, hängt sehr von der Fertigungsgenauigkeit, den eingehaltenen Toleranzen wie auch von der Formgestalt und Art der lösbaren und der festen Verbindungselementes ab.

Nach der erwähnten DE 39 42 030 A1 ist es möglich, die Kraftübertragung aufzuteilen in Drehmoment und Zugkraft. Die festen Anschläge übernehmen die Umfangskräfte aus dem Drehmoment und die lösbaren Elemente nur die Zugkräfte. Derartige Verbindungen mit starren konischen Gewindebolzen erfordern aufgrund der feinen Sitztoleranz der Konen und der Vielzahl der auf dem Umfang angeordneten Bolzen eine Grobtoleranz (Spielsitz) im Gewinde. Dadurch bedingt, kann auf den Gewinde-Konusbolzen ein Biegemoment übertragen werden. Die Einspannung liegt im Gewinde, d.h., dass die Biegemomente aus den Rohr-Umfangskräften multipliziert mit etwa der halben Bolzenlänge, vom Gewinde aufgenommen werden muss. Dadurch können so grosse und totale Verklemmungen im Gewinde auftreten, so dass es nicht mehr gelöst und nur durch die Zerstörung des Bolzens entspannt werden kann.

Ausgehend von der eingangs angegebenen gattungsgemässen Bauweise liegt der Erfindung die Aufgabe zugrunde, eine formschlüssige Bohrrohrverbindung zu schaffen, welche auch die bei extrem hohen Belastungen auftretenden Kräfte sicher überträgt und dabei auf das Gewinde wirkende Biegemomenten und damit auftretende Zwängungen vermeidet, so dass stets ein sicheres Lösen der Schraubverbindung ermöglicht wird.

Diese Aufgabe wird durch eine Rohrverbindung gelöst, deren Kupplungsglieder als beidseitige Abflachungen aufweisende Kugelabschnitte ausgebildet und in kugelkonkaven Lagerflächen des inneren Zapfen-Kuppelteils und in kugelkonkaven Gegen-Lagerflächen von Gewinde-Sicherungsringen gelagert sind, welche in Gewindebohrungen der äusseren Flanschringe eingeschraubt sind. In dieser Anordnung ist das Kupplungsglied vom Gewindeteil getrennt. Die Lagerung der beidseitigen Kugelabschnitte in kugelkonkaven Lagerflächen ermöglicht geringfügige Bewegungen des das Kupplungsglied bildenden Kugelabschnitts, ohne zu verkanten. Eine direkte Kraftübertragung auf das Gewinde wird vermieden, da der äussere Kugelabschnitt im Gewinde-Sicherungsring gelagert ist. Weiterhin wird eine geringfügige Bewegungstoleranz ermöglicht, so dass die auftretenden Umfangskräfte auf die fest gelagerten Elemente des Kupplungsgliedes übertragen werden können.

Eine vorteilhafte Kraftaufnahme und -übertragung wird dadurch erreicht, dass der Radius der im inneren Flansch gelagerten Kugelabschnitt-Hälfte grösser ist als der Radius der in dem im Flansch eingeschraubten Gewinde-Sicherungsringes gelagerten Kugelabschnitt-Hälfte. Dabei können entsprechend den auftretenden Kraftverhältnissen die Radien der Kugelabschnitt-Hälften denselben Mittelpunkt oder bei abstandete Mittelpunkte haben.

Nach einem weiteren Vorschlag weist das Kupplungsglied zwischen zwei Kugelabschnitt-Hälften einen Übergangsbund auf, der in eine ringförmige Ausnehmung des Gewinde-Sicherungsringes mit geringem Spiel eingreift. Durch die nichtkraftschlüssige Auflagerung des Übergangsbundes wird zusätzlich eine direkte Kraftübertragung auf das Gewinde verhindert.

Zur Verstärkung des festen Sitzes kann die im inneren Zapfen-Kuppelteil gelagerte Kugelabschnitt-Hälfte eine umlaufende Dichtungsnut mit einsetzbarer Ring-Dichtung aufweisen.

Eine weitere Ausbildung sieht vor, dass der Kugelabschnitt zum Einführen eines Zieh-Werkzeuges eine zentrische, hinterschnittene Bohrung aufweist, deren Einführ-Bohrungsdurchmesser mit gegenüberliegenden Aussparungen versehen ist.

Ein weiterer Vorschlag sieht vor, dass der Gewinde-Sicherungsring an seiner Aussenfläche einen öffnungsdurchmesser aufweist, der etwa dem Durchmesser der Abflachung der Kugelabschnitt-Hälfte mit dem kleinen Radius entspricht. Nach dieser Ausführung ist der Gewinde-Sicherungsring als offener Ring gestaltet. Soll die Verbindung der Rohre weitgehend vor Verschmutzung oder Erd- bzw. Gesteinsteilen geschützt bleiben, kann der Gewinde-Sicherungsring an seiner Aussenfläche einen öffnungsdurchmesser aufweisen, der etwa dem den Aussparungen entsprechenden Mass entspricht. Auf diese Weise ist der Gewinde-Sicherungsring als geschlossene Ringkappe ausgebildet.

Vorteilhaft erweist es sich, wenn der Gewinde-Sicherungsring in seiner Aussenfläche koaxiale Bohrungen oder Schlitze zum Eingriff eines Werkzeugs aufweist.

Weiterhin ist vorgesehen, dass das Schraubgewinde zum Einschrauben des Gewinde-Sicherungsrings ein Rundgewinde ist, um ein Verklemmen zu vermeiden.

In einer abgewandelten Ausbildungsweise kann vorgesehen sein, dass der Kugelabschnitt im Bereich seiner Kugelabschnitt-Hälfte mit dem kleineren Radius eine zentrische zylindrische oder leicht konische Vertiefung aufweist, deren Tiefe etwa die Hälfte bis zwei Drittel der des Dickenmasses zwischen den beidseitigen Abflachungen ausmacht. Diese Vertiefung kann auch als Ganzes leicht konisch oder aus einem zylindrischen und einem konischen Abschnitt zusammengesetzt sein.

Diese Vertiefung dient vorzugsweise dazu, Raum zu schaffen, damit gemäss einem weiteren Vorschlag der Gewinde-Sicherungsring, der im zentrischen Bereich einen zur Vertiefung in der aussenliegenden Kugelabschnitt-Hälfte mit dem kleineren Radius einen nach innen gerichtete zylindrische oder leicht konischen Ansatz aufweist, eingeschraubt werden kann, welcher zentrisch mit einer durchgehenden Bohrung von polygonalem Querschnitt versehen ist. Dabei kann diese polygionale Bohrung ein Drei-, Vier-, Sechs- oder Achtkant sein.

Nach einem anderen Vorschlag kann vorgesehen sein, dass die kugelkonkaven Lagerflächen des inneren Zapfen-Kuppelteils und die Gewindebohrung zum Einschrauben des Gewinde-Sicherungsringes in Flanschringen angebracht sind, welche in den ineinandergreifenden Muffen- und Zapfen-Kuppelteilen befestigt sind. Dabei können die Flanschringe jeweils mittels eines ringförmigen Bundes formschlüssig in den Muffen- und Zapfen-Kupplungsteilen eingesetzt sein, um einen auch während des Bohrbetriebes festhaftenden Sitz der verbundenen Bauelemente zu gewährleisten. Dieser feste Sitz wird weiterhin dadurch gesichert, dass jedes der Muffen- und Zapfen-Kupplungsteile mit den jeweiligen Enden der Bohrrohre fest verbunden ist. Eine sehr vorteilhafte Verbindung wird bei doppelwandigen Bohrrohren dadurch erreicht, dass jedes Muffen- und Zapfenkupplungsteil mit einem Ringbund versehen ist, der zur Fixierung und Zentrierung der Kupplungsteile in den Ringspalt zwischen den Bohrrohr-Wandungen eingreift.

Um eine längere Einsatzzeit des Kugelabschnitts zu erreichen, kann die Oberfläche desselben gehärtet sein.

Weitere Merkmale und Besonderheiten der Erfindung sind den Ausführungsbeispielen zu entnehmen, die in den Zeichnungen dargestellt sind.

Es zeigen
- Fig. 1: eine perspektivische Darstellung der Rohrverbindung im Teilschnitt,
- Fig. 2: einen vergrösserten Ausschnitt "A" nach Fig. 1 als Schnittdarstellung,
- Fig. 3: eine Darstellung des Kugelabschnitts in Seitenansicht,
- Fig. 4: eine Darstellung des Gewinde-Sicherungsringes im Schnitt als offener Ring,
- Fig. 5: eine Einzelheit bei "B" nach Fig. 3 und 6 (Bohrung im Kugelabschnitt),
- Fig. 6: eine Darstellung des Kugelabschnitts in Seitenansicht mit Halbschnitt,
- Fig. 7: eine Schnittdarstellung des Gewinde-Sicherungsringes als geschlossene Ringkappe.
- Fig. 8: eine Schnittdarstellung gemäss Fig. 2 einer abgewandelten Ausbildung,
- Fig. 9: eine Ansicht in Richtung "A" gemäss Fig. 8.

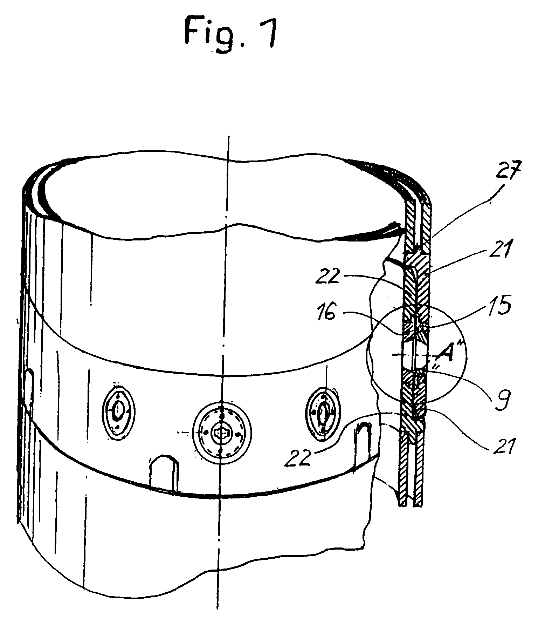

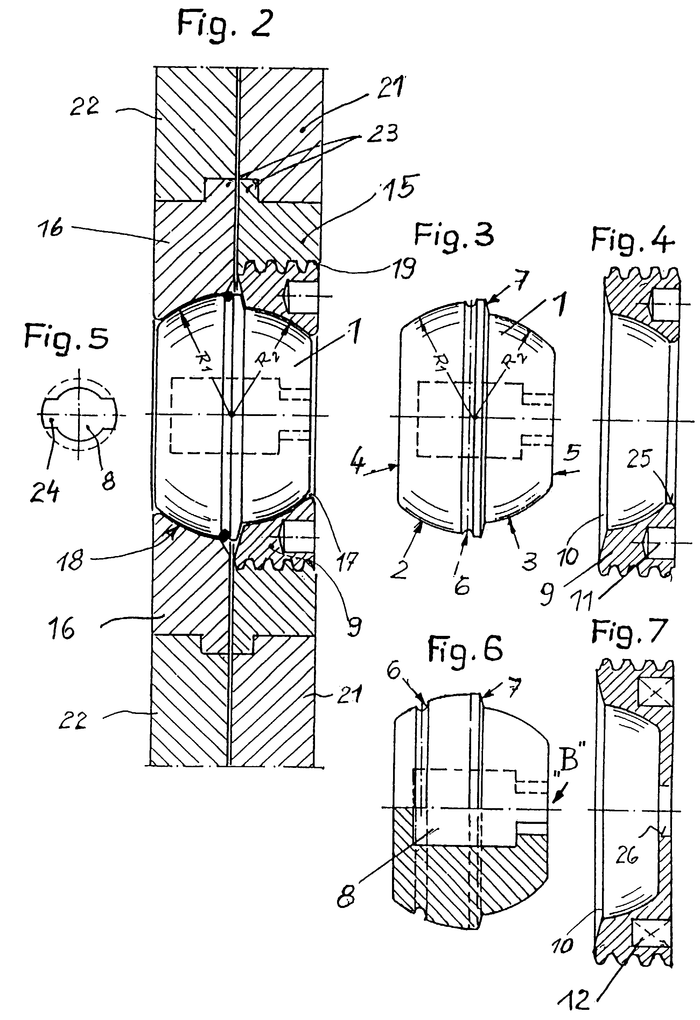

Das Kupplungsglied ist gemäss Fig. 2, 3 und 6 als Kugelabschnitt 1 ausgebildet und besteht aus den Kugelabschnitt-Hälften 2 und 3 mit beidseitigen Abflachungen 4 und 5. Die Kugelabschnitt-Hälften 2 und 3 haben unterschiedliche Radien R1 und R2, wobei - siehe Fig. 1 - die Kugelabschnitt-Hälfte 2 mit dem grösseren Radius R1 in der inneren kugelkonkaven Lagerfläche 18 des Flanschringes 16 des Zapfen-Kuppelteils 22 gelagert ist, während die Kugelabschnitt-Hälfte 3 mit dem kleineren Radius R2 in der kugelkonkaven Gegen-Lagerfläche 17 gelagert ist. Diese ist im Gewinde-Sicherungsring 9 angebracht, welcher mittels eines Rundgewindes in die Gewindebohrung 19 eingeschraubt und dadurch mit Flanschring 15 des Zapfen-Kupplungsteils 21 verbunden ist.

Zwischen den beiden Kugelabschnitt-Hälften 2 und 3 ist der Übergangsbund 7 zu erkennen, der nicht formschlüssig von der Ausnehmung 10 des Gewinde-Sicherungsringes 9 umschlossen ist, sondern ein geringes Spiel hat. Der Kugelabschnitt 2 ist in der kugelkonkaven Lagerfläche 18 des inneren Flanschringes 16 gelagert und ermöglicht dadurch eine gewisse Nachgiebigkeit der Verbindung beim Auftreten von Biegemomenten. Der Kugelabschnitt 3 ist in der kugelkonkaven Gegen-Lagerfläche 17 des lösbaren Gewinde-Sicherungsringes 9 gelagert, welcher durch Verschrauben mit dem äusseren Flanschring 15 mit dem Zapfen-Kupplungsteil 21 in Verbindung steht. Dadurch wird eine direkte Übertragung von Biege- und Umfangskräften auf das Gewinde vermieden. Durch den Übergangsbund 7 wird ferner vermieden, dass sich der Kugelabschnitt 1 bei sehr starken einseitigen Krafteinwirkungen in den konkaven Lagerflächen schrägstellen kann.

Die Flanschringe 15 und 16 sind mit je einem ringförmigen Bund 23 versehen und dadurch in ihrer Lage in entsprechenden Nuten der Zapfen- und Muffenkuppelteil 21 und 22 fixiert. Die letzteren sind jeweils mit einem Ringbund 27 versehen, mittels welchem sind im Bohrrohr - bei doppelwandigen Bohrrohren im Ringspalt zwischen den Wandungen festgelegt sind, wie aus Fig. 1 ersichtlich ist.

Fig. 4 zeigt den Gewinde-Sicherungsring 9 als offenen Ring mit der zur Aufnahme des Übergangsbundes 7 vorgesehenen Ausnehmung 10 und den zum Werkzeugeingriff zwecks Ein- und Ausschrauben vorgesehenen Bohrungen 11. Fig. 7 zeigt den Gewinde-Sicherungsring 9 als geschlossene Ringkappe ausgebildet mit zur Werkzeugeingriff vorgesehenen Schlitzen 12.

Wie aus den Fig. 1, 3 und 6 ersichtlich ist, befindet sich hinter dem Übergangsbund 7 eine Dichtungsnut 6 von halbrundem Querschnitt zur Aufnahme einer Ringdichtung.

In Fig. 6 ist das Kupplungsglied 1 mit auf dem vorderen Teil des Kugelabschnittes 2 umlaufender Dichtungsnut 6 sowie der im äusseren Bereich des Kugelabschnittes 3 zum Einsetzen von Ziehwerkzeugen vorgesehenen hinterschnittenen Bohrung 8 dargestellt. Letztere dient zum Einsetzen, Lokkern, Korrigieren oder Herausziehen des Kugelabschnitts 1 aus seinem Lagersitz.

In Fig. 5 ist diese Bohrung 8 als Einzelheit bei "B" in Ansicht vorn dargestellt.

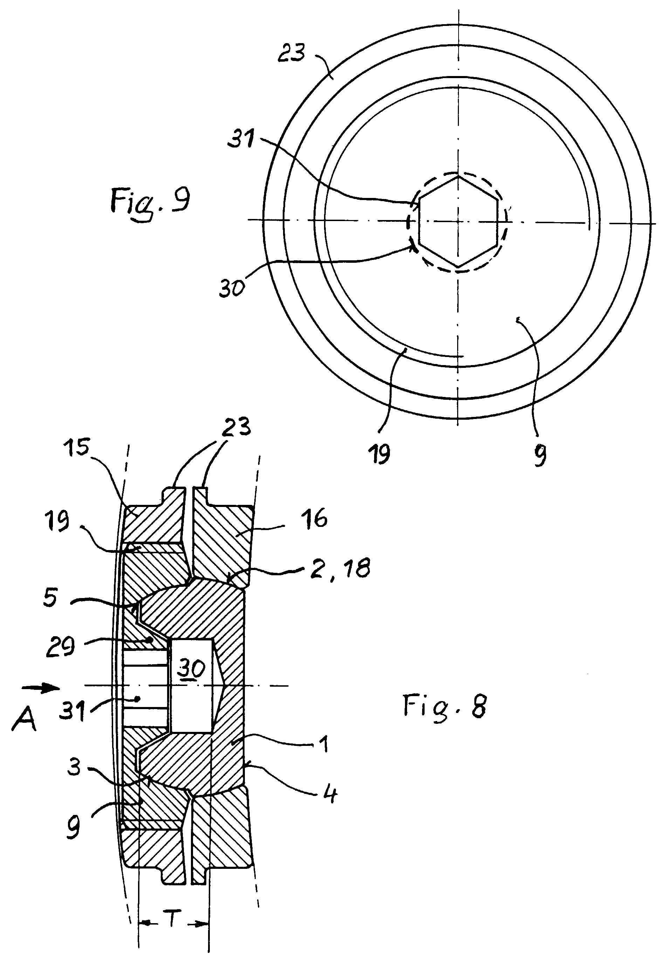

Die Fig. 8 und 9 veranschaulichen eine abgewandelte Ausbildungsweise des Gewinde-Sicherungsrings 9, der in Fig. 2, 4 und 7 dargestellt ist. Durch diese abgewandelte Ausbildung werden die dort vorhandenen Bohrungen 11 oder Schlitze 12 zum Ansetzen eines Spezialwerkzeugs, um den Gewinde-Sicherungsring 9 in den Flanschring 15 ein- oder aus diesem herauszudrehen, durch eine Einsatzmöglichkeit für einen sog. Inbus-Schlüssel ersetzt.

Wie Fig. 8 und 9 erkennen lassen, ist in den Gewinde-Sicherungsring 9 eine Sechskant-öffnung 31 zum Ansetzen eines Inbus-Schlüssels eingelassen, die in eine zylindrische Vertiefung 30 mündet, welche in der Kugelabschnitt-Hälfte 3 mit dem kleineren Radius vorhanden ist. Zur Verstärkung der Wandung des Gewinde-Sicherungsringes 9 ist dieser mit einem in die Richtung zur Kugelabschnitt-Hälfte 3 weisenden konischen Ansatz 29 versehen, in welchen die Sechskant-öffnung 31 eingeschnitten ist. Dieser Ansatz 29 ragt in eine Vertiefung 30, welche einen inneren zylindischen und äusseren konischen Abschnitt aufweist.

## Patentansprüche

1. Bohrrohr mit ein- oder beidendig angebrachten Verbindungsmuffen zum Ankuppeln weiterer Bohrrohre zu einem Bohrrohrstrang, bei dem die sich überlappend ineinandergreifenden als Flanschringe ausgebildete Muffen- und Zapfen-Kuppelteile umfangsverteilt angeordnete radiale Bohrungen aufweisen, in welche in diesen gelagerte Kupplungsglieder lösbar eingesetzt sind
dadurch gekennzeichnet, dass
A. die Kupplungsglieder (1) als beidseitig Abflachungen (4, 5) aufweisende Kugelabschnitte (1) ausgebildet und
B. in kugelkonkaven Lagerflächen (18) des inneren Zapfen-Kuppelteils (16) und in kugelkonkaven Gegen-Lagerflächen (17) von Gewinde-Sicherungsringen (9) gelagert sind, welche in Gewindebohrungen (19) der äusseren Flanschringe (15) eingeschraubt sind.

2. Bohrrohr nach Anspruch 1, dadurch gekennzeichnet, dass der Radius (R1) der im inneren Flansch (16) gelagerten Kugelabschnitt-Hälfte (2) grösser ist als der Radius (R2) der in dem im Flansch (15) eingeschraubten Gewinde-Sicherungsringes (9) gelagerten Kugelabschnitt-Hälfte (3).

3. Bohrrohr nach Anspruch 2, dadurch gekennzeichnet, dass die Radien (R1, R2) der Kugelabschnitt-Hälften (2, 3) denselben Mittelpunkt (M) haben.

4. Bohrrohr nach Anspruch 2, dadurch gekennzeichnet, dass die Radien (R1, R2) der Kugelabschnitt-Hälften (2, 3) beabstandete Mittelpunkte haben.

5. Bohrrohr nach Anspruch 2, dadurch gekennzeichnet, dass das Kupplungsglied (1) zwischen zwei Kugelabschnitt-Hälften (2, 3) einen Übergangsbund (7) aufweist.

6. Bohrrohr nach Anspruch 5, dadurch gekennzeichnet, dass der Übergangsbund (7) in eine ringförmige Ausnehmung (10) des Gewinde-Sicherungsringes (9) mit geringem Spiel eingreift.

7. Bohrrohr nach Anspruch 1, dadurch gekennzeichnet, dass die im inneren Flanschring (16) gelagerte Kugelabschnitt-Hälfte (2) eine umlaufende Dichtungsnut (6) mit einsetzbarer Ring-Dichtung aufweist.

8. Bohrrohr nach Anspruch 2, dadurch gekennzeichnet, dass der Gewinde-Sicherungsring (9) an seiner Aussenfläche einen Öffnungsdurchmesser (25) aufweist, der etwa dem Durchmesser der Abflachung (5) der Kugelabschnitt-Hälfte (3) mit dem kleinen Radius (R2) entspricht.

9. Bohrrohr nach wenigstens einem der Ansprüche 1 bis 7, dadurch gekennzeichnet, dass der Kugelabschnitt (1) zum Einführen eines Zieh-Werkzeuges eine zentrische, hinterschnittene Bohrung (8) aufweist, deren Einführ-Bohrungsdurchmesser mit gegenüberliegenden Aussparungen (24) versehen ist.

10. Bohrrohr nach Anspruch 9, dadurch gekennzeichnet, dass der Gewinde-Sicherungsring (9) an seiner Aussenfläche einen öffnungsdurchmesser (26) aufweist, der etwa dem den Aussparungen (24) entsprechenden Mass entspricht.

11. Bohrrohr nach Anspruch 1, dadurch gekennzeichnet, dass der Gewinde-Sicherungsring (9) in seiner Aussenfläche koaxiale Bohrungen (11) oder Schlitze (12) zum Eingriff eines Werkzeugs aufweist.

12. Bohrrohr nach Anspruch 1 und einem oder mehreren der Ansprüche 2 bis 7, dadurch gekennzeichnet, dass der Kugelabschnitt (1) im Bereich seiner Kugelabschnitt-Hälfte (3) mit dem kleineren Radius eine zentrische zylindrische oder leicht konische Vertiefung (30) aufweist, deren Tiefe (T) etwa die Hälfte bis zwei Drittel der des Dickenmasses zwischen den beidseitigen Abflachungen (4 und 5) ausmacht.

13. Bohrrohr nach Anspruch 12, dadurch gekennzeichnet, dass der Gewinde-Sicherungsring (9) im zentrischen Bereich einen zur Vertiefung (30) in der aussenliegenden Kugelabschnitthälfte (3) mit dem kleineren Radius nach innen gerichtete zylindrische oder leicht konischen Ansatz (29) aufweist, welche zentrisch mit einer durchgehenden Bohrung von polygonem Querschnitt (31) versehen ist.

14. Bohrrohr nach Anspruch 13, dadurch gekennzeichnet, dass die polygone Bohrung (31) ein Drei-, Vier-, Sechs-, oder Achtkant ist.

15. Bohrrohr nach Anspruch 1, dadurch gekennzeichnet, dass das Schraubgewinde zum Einschrauben des Gewinde-Sicherungsrings (9) ein Rundgewinde ist.

16. Bohrrohr nach Anspruch 1, dadurch gekennzeichnet, dass die kugelkonkaven Lagerflächen (18) des inneren Zapfen-Kuppelteils (16) und die Gewindebohrung (19) zum Einschrauben des Gewinde-Sicherungsringes (9) in Flanschringen (16, 15) angebracht sind, welche in den ineinandergreifenden Muffen- und Zapfen- Kuppelteilen (21, 22) befestigt sind.

17. Bohrrohr nach Anspruch 16, dadurch gekennzeichnet, dass die Flanschringe jeweils mittels eines ringförmigen Bundes (23) formschlüssig in den Muffen- und Zapfen-Kupplungsteilen (21, 22) eingesetzt sind.

18. Bohrrohr nach einem der Ansprüche 1 bis 17, dadurch gekennzeichnet, dass jedes der Muffen- und Zapfen-Kupplungsteile (21, 22) mit den jeweiligen Enden der Bohrrohre fest verbunden ist.

19. Bohrrohr nach Anspruch 1, dadurch gekennzeichnet, dass bei doppelwandigen Bohrrohren jedes Muffen- und Zapfenkupplungsteil (21, 22) mit einem Ringbund (27) versehen ist, der zur Fixierung und Zentrierung der Kupplungsteile (21, 22) in den Ringspalt zwischen den Bohrrohr-Wandungen eingreift.

20. Bohrrohr nach einem oder mehreren der Ansprüche 1 bis 5, dadurch gekennzeichnet, dass die Oberfläche des Kugelabschnitts (1) gehärtet ist.

## Claims

1. Casing pipe with coupling sleeves at one or both ends for the connection of further casing pipes to form a run of piping with which the couplers for sleeves and pegs designed as overlapping and interlocking flanged rings show some radial bores, distributed over the circumference, in which some coupling elements, lodged in the latter, have removably been mounted,
characterized in that
A. the coupling elements (1) have been designed as spherical segments (1) showing some flattenings (4, 5) at both sides and
B. have been lodged in concave bearing faces (18) of the internal peg coupler (16) and in concave thrust bearing faces (17) of threaded locking rings (9) which have been screwed into some tap holes (19) of the external flanged rings (15).

2. Casing pipe according to claim 1, characterized in that the radius (R1) of the half of the spherical segment (2), lodged in the internal flange (16), is greater than the radius (R2) of the half of the spherical segment (3), lodged in the threaded locking ring (9) being screwed into the flange (15).

3. Casing pipe according to claim 2, characterized in that the radii (R1, R2) of the halves (2, 3) of the spherical segments have the same center (M).

4. Casing pipe according to claim 2, characterized in that the radii (R1, R2) of the halves (2, 3) of the spherical segments have spaced centers.

5. Casing pipe according to claim 2, characterized in that the coupling element (1), between two halves (2, 3) of the spherical segments, shows a transition collar (7).

6. Casing pipe according to claim 5, characterized in that the transition collar (7) enters, with a little play, a ring-shaped recess (10) of the threaded locking ring (9).

7. Casing pipe according to claim 1, characterized in that the half (2) of the spherical segment (2), lodged in the internal flanged ring (16), shows a circumferential lining groove (6) provided with an annular insert lining.

8. Casing pipe according to claim 2, characterized in that the threaded locking ring (9) shows, at its outside, an opening diameter (25) roughly corresponding to the diameter of the flattening (5) of the half (3) of the spherical segment with the small radius (R2).

9. Casing pipe according to at least one of the claims 1 to 7, characterized in
that the spherical segment (1) for entering a drawing tool shows an undercut central bore (8) of which the entering diameter has been fitted with opposite recesses (24).

10. Casing pipe according to claim 9, characterized in that the threaded locking ring (9) has, at its outside, an opening diameter (26) which nearly corresponds to the dimension appropriate to the recesses (24).

11. Casing pipe according to claim 1, characterized in that the outside of the threaded locking ring (9) shows some coaxial bores (11) or some slots (12) to be entered by a tool.

12. Casing pipe according to claim 1 and one or several of the claims 2 to 7, characterized in
that the spherical segment (1) has, in the scope of its half (3) showing the smaller radius, a centrical cylindric or slightly tapered recess (30) of which the depth (T) represents approximately half to two thirds of the thickness between the flattenings at both sides (4 and 5).

13. Casing pipe according to claim 12, characterized in that the threaded locking ring (9) shows, in its central scope, a cylindrical or somewhat tapered shoulder (29), directed to the interior and towards the recess (30) in the outside half (3) of the spherical segment having the smaller radius, which has been provided with a centric through bore of polygonal cross-section (31).

14. Casing pipe according to claim 13, characterized in that the polygonal bore (31) represents a trihedral, a square, a hexagon or an octagon.

15. Casing pipe according to claim 1, characterized in that the thread for screwing down the threaded locking ring (9) represents a round thread.

16. Casing pipe according to claim 1, characterized in that the concave bearing faces (18) of the internal peg coupler (16) and the tapped hole (19) for screwing down the threaded locking ring (9) have been provided in flanged rings (16, 15) being attached to the interlocked couplers for sleeves and pegs (21, 22).

17. Casing pipe according to claim 16, characterized in that each flanged ring has positively been fitted into the couplers for sleeves and pegs (21, 22) using an annular collar (23).

18. Casing pipe according to claims 1 to 17, characterized in that each coupler for sleeves and pegs (21, 22) has been firmly attached to the respective end of the casing pipe.

19. Casing pipe according to claim 1, characterized in that, with double-wall casing pipes, each coupler for sleeves and pegs (21, 22) has been provided with an annular collar (27) entering the annular gap between the walls of the casing pipe in order to fix and to center the couplers (21, 22).

20. Casing pipe according to one or several of the claims 1 to 5, characterized in
that the surface of the spherical segment (1) has been hardened.

## Revendications

1. Tube de forage pourvu de manchons de raccordement à une ou aux deux extrémités pour accoupler d'autres tubes de forage qui formeront une ligne de tubes avec laquelle les éléments accoupleurs de manchons et de tenons, s'enchaînant à recouvrement et réalisés en tant qu'anneaux de bride, présentent des alésages radiaux distribués sur la circonférence dans lesquelles des membres d'accouplement, logés dans ces derniers, ont été détachablement placés,
caractérisé par ce que
A. les membres d'accouplement (1) ont été conçus en tant que segments sphériques (1) ayant des aplatissements bilatéraux et
B. logés dans des surfaces d'appui (18) concaves de l'élément accoupleur de tenon (16) intérieur et dans des surfaces de butée (17) concaves des anneaux de sécurité filetés (9) qui ont été vissés dans des taraudages (19) des anneaux de bride (15) extérieurs.

2. Tube de forage selon revendication 1, caractérisé par ce que le rayon (R1) de la moitié de segment sphérique (2), logée dans la bride (16) intérieure, est plus grand que le rayon (R2) de la moitié de segment sphérique (3) logée dans l'anneau de sécurité fileté (9) vissé dans la bride (15).

3. Tube de forage selon revendication 2, caractérisé par ce que les rayons (R1, R2) des moitiés de segment sphérique (2, 3) ont le même centre (M).

4. Tube de forage selon revendication 2, caractérisé par ce que les rayons (R1, R2) de ces moitiés (2, 3) présentent des centres espacés.

5. Tube de forage selon revendication 2, caractérisé par ce que le membre d'accouplement (1) présente un collet de transition (7) entre deux moitiés de segment sphérique (2, 3).

6. Tube de forage selon revendication 5, caractérisé par ce que le collet de transition (7) entre, avec petit jeu, dans un creux annulaire (10) de l'anneau de sécurité fileté (9).

7. Tube de forage selon revendication 1, caractérisé par ce que la moitié de segment sphérique (2), logée dans l'anneau de bride (16) intérieur, montre une rainure pour garniture périphérique (6) avec garniture annulaire à insérer.

8. Tube de forage selon revendication 2, caractérisé par ce qu'à sa face extérieure, l'anneau de sécurité fileté (9) a un diamètre d'ouverture (25) correspondant environ au diamètre de l'aplatissement (5) de la moitie de segment sphérique (3) ayant le petit rayon (R2).

9. Tube de forage selon, au moins, une des revendications 1 à 7, caractérisé par ce
que le segment sphérique (1), pour insérer un outil de traction, présente un alésage central contre-dépouillé (8) dont le diamètre d'alésage d'insertion a été pourvu d'évidements (24) opposés.

10. Tube de forage selon revendication 9, caractérisé par ce qu'à sa face extérieure, l'anneau de sécurité fileté (9) a un diamètre d'ouverture (26) qui correspond à peu près à la mesure conforme aux évidements (24).

11. Tube de forage selon revendication 1, caractérisé par ce qu'à sa face extérieure, l'anneau de sécurité fileté (9) présente des alésages (11) coaxiaux ou des fentes (12) permettant l'entrée d'un outil.

12. Tube de forage selon revendication 1 et l'une ou plusieurs des revendications 2 à 7, caractérisé par ce
qu'avec sa moitié (3) ayant le rayon plus petit, le segment sphérique (1) montre un creux central et cylindrique ou légèrement conique (30) dont la profondeur (T) forme environ 1/2 à 2/3 de l'épaisseur entre les aplatissements (4 et 5) qui se trouvent des deux côtés.

13. Tube de forage selon revendication 12, caractérisé par ce qu'à son domaine central, l'anneau de sécurité fileté (9) présente une saillie cylindrique ou légèrement conique dirigée vers l'intérieur, soit vers le creux (30) dans la moitié de segment sphérique (3) avec le rayon plus petit et se trouvant à l'extérieur, moitié ayant un alésage central passant de coupe polygonale (31).

14. Tube de forage selon revendication 13, caractérisé par ce que l'alésage polygonal (31) représente un trou à trois, quatre, six ou huit bords.

15. Tube de forage selon revendication 1, caractérisé par ce que le taraudage pour visser l'anneau de sécurité fileté (9) est du type rond.

16. Tube de forage selon revendication 1, caractérisé par ce que les faces d'appui (18) concaves de l'élément accoupleur de tenon (16) intérieur et le taraudage (19) pour visser l'anneau de sécurité fileté (9) ont été réalisés sur des anneaux de bride (15, 16) fixés dans les éléments accoupleurs de manchon et de tenon (21, 22) enchaînés.

17. Tube de forage selon revendication 16, caractérisé par ce que chaque anneau de bride a été positivement inséré dans les éléments accoupleurs de manchon et de tenon (21, 22) grâce à un collet annulaire (23).

18. Tube de forage selon l'une des revendications 1 à 17, caractérisé par ce
que chaque élément accoupleur de manchon et de tenon (21, 22) est fermement attaché aux bouts concernés des tubes de forage.

19. Tube de forage selon revendication 1, caractérisé par ce qu'avec des tubes de forage à double paroi, chaque élément accoupleur de manchon et de tenon (21, 22) a été muni d'un collet annulaire (27) qui s'insère dans la fente en anneau entre les parois de tube de forage pour fixer et centrer les éléments accoupleurs (21, 22).

20. Tube de forage selon l'une ou plusieurs des revendications 1 à 5, caractérisé par ce que la surface du segment sphérique (1) a été trempée.
